# EUROPEAN PATENT SPECIFICATION

(11) **EP 3 258 077 B1**
(45) Date of publication and mention of the grant of the patent: **04.09.2019**
(21) Application number: 17176216.4
(22) Date of filing: 15.06.2017
(51) Int. Cl.: F01N 3/20

(54) **METHOD TO PREVENT STICKING OF A SCR INJECTOR**
VERFAHREN ZUR VERHINDERUNG DES FESTGEHENS EINES SCR-INJEKTORS
PROCÉDÉ POUR EMPÊCHER LE COLLAGE D'UN INJECTEUR SCR

(30) Priority: 16.06.2016 GB 201610490
(43) Date of publication of application: 20.12.2017
(73) Proprietor: Delphi Technologies IP Limited, St. Michael (BB)
(72) Inventor: SYKES, Martin A.P., Rainham, Kent ME8 8RB (GB); ROSE, Jonathan P., Tunbridge Wells, KENT TN2 4NP (GB); CRAIG, Andrew R., Aldershot, HAMPSHIRE GU12 6QZ (GB)
(74) Representative: Delphi France SAS

(56) References cited:
- EP-A1- 2 851 529
- GB-A- 2 522 845
- US-A1- 2008 034 733

## Description

### TECHNICAL FIELD

The present invention relates to a method to prevent sticking of a SCR injector.

### BACKGROUND OF THE INVENTION

Selective Catalytic Reduction systems, hereafter SCR, are arranged to reduce pollutant emissions expelled from an exhaust pipe by an internal combustion engine. A SCR equipment generally comprises a supply pump delivering pressurized reagent, drawn from a low pressure tank, to an injector that spray said reagent within the pipe in the exhaust gas stream. The reagent is an aqueous liquid, for instance urea based, and, as such it freezes below a certain temperature for instance -11°C.

When the engine of a vehicle is stopped, its temperature drops and, should ambient temperature be lower than said certain freezing temperature, reagent remaining in the injector may freeze, and expands when freezing. With the associated forces exerted upon the injector said expansion may potentially cause irreparable damage. To prevent such damage it is known to perform a purging cycle at engine stop. Indeed said purging cycle consists to energize a purge pump that sucks back to the tank, reagent remaining in the injector.

Unfortunately, said purging cycle is not perfect and, after completion of the purging cycle some reagent, in liquid state or gaseous state, may remain in the injector. Under certain engine shut down conditions the water content of the remaining reagent may evaporate, whereby crystallization of the urea content may cause the injector to stick. US 2008/0034733 discloses a purging method for a fuel injector and, GB2522845 discloses a multi-cycle purging method as disclosed in the preamble of claim 1.

### SUMMARY OF THE INVENTION

Accordingly, it is an object of the present invention to resolve the above mentioned problems in providing a method to prevent sticking of a SCR injector, the injector being adapted to be arranged in a SCR system wherein a supply pump pressurizes and flows an aqueous reagent, such as a urea solution fluid, toward the injector which in turn sprays said reagent into the stream of exhaust gases in an exhaust pipe of an internal combustion engine, the method comprising the steps of:
a) performing an initial purge cycle of the injector when said supply pump is stopped,
b) performing another purging cycle, a purge cycle consisting of energizing a purge pump which then sucks the reagent remaining in the injector back to the tank.

The method further comprises the step:
c) monitoring time and waiting for a predetermined duration between the initial purge cycle, step a), and said another purge cycle, step b), the predetermined duration being determined by monitoring injector temperature and performing said another purge cycle, step b), when said injector temperature reaches a first temperature threshold.

The first temperature threshold may be 105°C.

In a first alternative step b) is only performed once.

In another alternative step b) is performed several times.

In said another alternative, the method further comprises the step:
d) waiting for a subsequent predetermined duration between each subsequent performance of step b).

Also, the subsequent predetermined duration is comprised between 60 seconds and 900 seconds and, is preferably less than 300 seconds.

Also, the method further comprises step:
e) monitoring temperature of the injector and performing step b) if said temperature is above a second predetermined temperature corresponding to the freezing temperature of the reagent.

For instance, said second predetermined temperature may be 0°C or -11°C.

The invention further extends to an electronic control unit configured to control the operation of a SCR system according to a method as described above.

Also, the invention is about a software executing the steps of said method when uploaded onto the ECU.

The invention further extends to a SCR system of an internal combustion engine, the SCR being controlled by an ECU as mentioned above.

### BRIEF DESCRIPTION OF THE DRAWINGS

The present invention is now described by way of example with reference to the accompanying drawings in which:
Figure 1 is a sketch of a SCR.
Figure 2 is a plot of the method to prevent sticking of an SCR injector, as per the invention.

### DESCRIPTION OF THE PREFERRED EMBODIMENTS

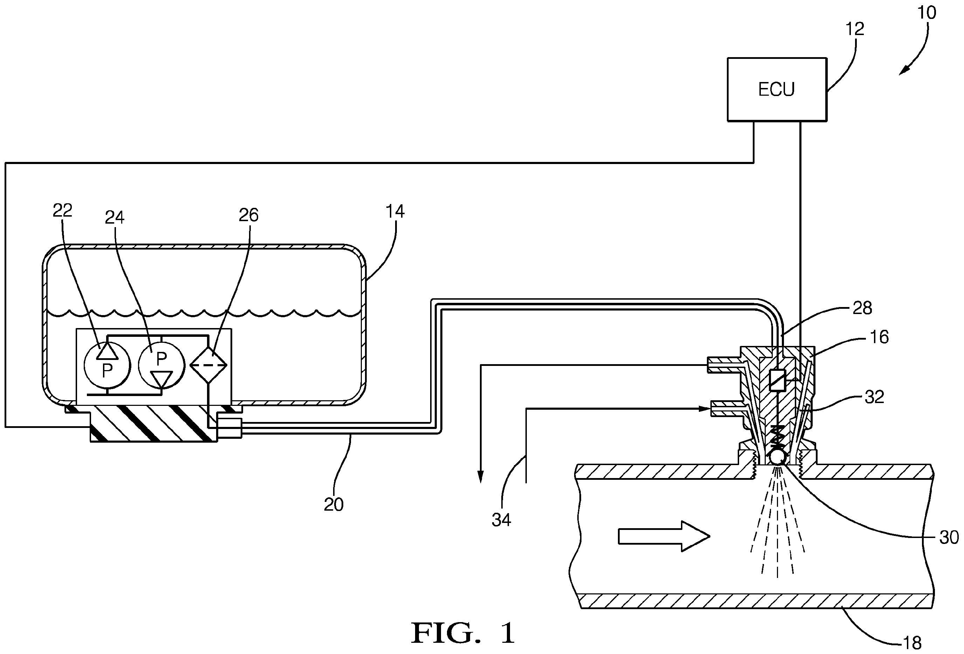

According to figure 1 a typical selective catalytic reduction (SCR) 10 system controlled by an electronic control unit 12 (ECU) comprises a main tank 14 wherein is held aqueous reagent, such as urea based reagent. A reagent injector 16 arranged to spray the reagent in an exhaust pipe 18 of an internal combustion engine, not represented, is fluidly connected to the tank via a connection pipe 20. In said tank 14 is arranged a supply pump 22 that draws reagent from the tank 14 to the injector 16 and a purge pump 24 for drawing reagent from the injector 16 back to the tank 14 also, a filter 26 retains particles that may be present in the reagent. The reagent enters the injector 16 via an inlet 28 and is sprayed into the stream of exhaust gases via a nozzle 30 that is alternatively opened or closed by a controlled valve member 32. Furthermore, the SCR 10 is provided with a coolant circuit 34 for cooling the injector 16 that is in contact with the hot exhaust pipe 18.

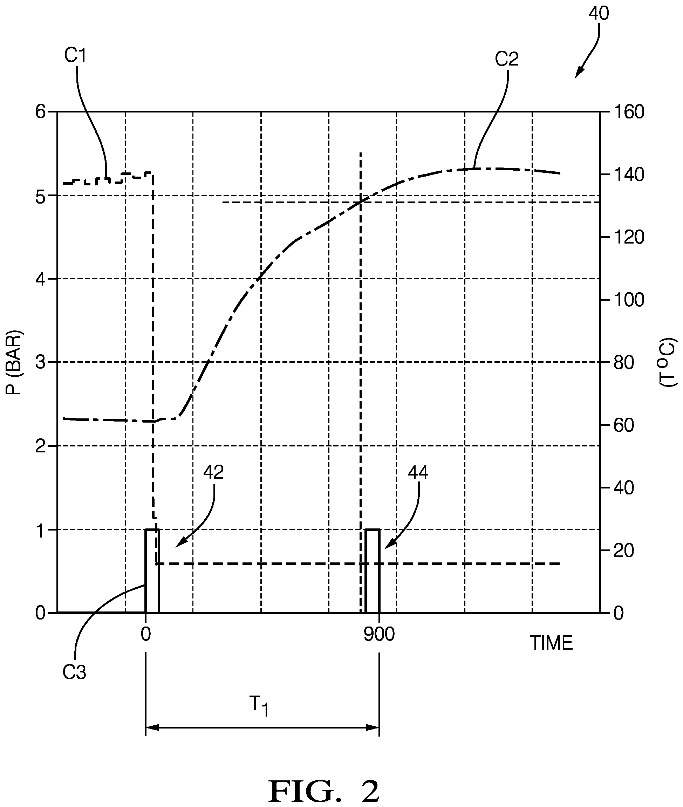

A method of operation 40 of the SCR 10 is now described in accordance to figure 2 on which the reagent pressure, curve C1, the temperature of the injector 16, curve C2 and, the purge cycle, curve C3 are plotted against time t.

In use, the supply pump 22 pressurizes the reagent, for instance around 5 bars, and flows it to the injector 16 which operates at a stabilized temperature of about 60°C.

At engine stop, the supply pump 22 and the coolant circuit 34 are stopped, the pressure of the reagent drops immediately and the temperature of the injector slowly rises since the heat of the exhaust pipe transfers to the injector. The temperature of the injector rises from 60°C to 140°C within approximately 900 seconds and afterward, the temperature of the injector decreases down to the ambient temperature.

As soon as pressure of the reagent stops, an initial purge cycle 42 is performed. Said purge cycle 42 consists in energizing the purge pump 24 which then sucks the reagent remaining in the connection pipe 20 and in the injector 16 back to the tank. By doing so, the injector 16 is emptied, at least partially, from the liquid.

To optimize the emptying of the injector, another purge cycle 44 is performed after a first duration T1 following the initial purge cycle 42. This duration T1, approximately 900 seconds on the example of figure 2, can be chosen arbitrarily between 60 and 1800 seconds (not part to the invention) or, by monitoring the temperature of the injector. Said another purge cycle 44 is performed when said injector temperature maximizes, or at least reaches boiling temperature of the reagent. The dotted lines indicate on the curves of figure 2 that before performing the second purge cycle, it is controlled that the temperature of the injector rises above a predetermined value FT. Urea reagent boils at 105°C and performing said another purge cycle at, or above, said boiling temperature, ensures that the aqueous reagent still present in the injector is entirely vaporized and is sucked away from the injector by said another purge cycle.

By implementing said another purge cycle 44 relatively long after the initial cycle 42 it is ensured that the injector 16 is well emptied and, when the injector temperature drops to the ambient temperature, no remaining reagent will crystalize resulting in sticking of the injector.

A third purge cycle, or a fourth or even more, may be performed in order to further optimize sticking prevention of the injector, said subsequent purge cycle being implemented after a second duration T2, of about 300 seconds but alternatively, said second duration T2 can be chosen anywhere between 60 and 900 seconds.

### LIST OF REFERENCES

- C1: reagent pressure Vs. time
- C2: injector temperature Vs. time
- C3: purge cycle Vs. time
- FT: temperature threshold
- T1: first duration
- T2: subsequent duration

- 10: SCR system
- 12: Electronic Control Unit - ECU
- 14: tank
- 16: injector
- 18: exhaust pipe
- 20: connection pipe
- 22: supply pump
- 24: purge pump
- 26: filter
- 28: injector inlet
- 30: injector nozzle
- 32: valve member
- 34: coolant circuit

- 40: method
- 42: initial purge cycle
- 44: second purge cycle

## Claims

1. Method (40) to prevent sticking of a SCR injector (16), the injector (16) being adapted to be arranged in a SCR system (10) wherein a supply pump (22) pressurizes and flows an aqueous reagent, such as a urea solution fluid, toward the injector (16) which in turn sprays said reagent into the stream of exhaust gases in an exhaust pipe (18) of an internal combustion engine, the method (40) comprising the steps of:
a) performing an initial purge cycle (42) of the injector (16) when said supply pump (22) is stopped,
b) performing another purging cycle (44), a purge cycle (42, 44) consisting of sucking the reagent remaining in the injector (16) back to the tank;
wherein the method (40) further comprises the step:
c) monitoring time and waiting for a predetermined duration (T1) between the initial purge cycle (42), step a), and said another purge cycle (44), step b), the predetermined duration (T1) being determined by monitoring injector temperature (C2) and performing said another purge cycle (44), step b), when said injector temperature reaches a first temperature threshold (FT).

2. Method (40) as claimed in claim 1 wherein said first temperature threshold (FT) is 105°C.

3. Method (40) as claimed in any one of the preceding claims wherein step b) is only performed once.

4. Method (40) as claimed in any one of the claims 1 to 3 wherein step b) is performed several times.

5. Method (40) as claimed in claim 4 further comprising the step:
d) waiting for a subsequent predetermined duration (T2) between each subsequent performance of step b).

6. Method (40) as claimed in claim 5 wherein the subsequent predetermined duration (T2) is comprised between 60 seconds and 900 seconds, and is preferably less than 300 seconds.

7. Method (40) as claimed in any one of the preceding claims further comprising step:
e) monitoring temperature (C2) of the injector and performing step b) as long as said temperature is above a second predetermined threshold.

8. Method (40) as claimed in claim 7 wherein said second predetermined threshold is 0°C.

9. Method (40) as claimed in claim 7 wherein said second predetermined threshold is -11°C.

10. Electronic control unit (12) configured to control the operation of a SCR system (10) according to a method (40) as set in any one of the preceding claims.

11. Software executing the steps of the method (40) as claimed in any one of the claims 1 to 9 when uploaded onto the ECU of claim 10.

## Patentansprüche

1. Verfahren (40) zum Verhindern eines Festsitzens eines SCR-Injektors (16), wobei der Injektor (16) ausgebildet ist, in einem SCR-System (10) angeordnet zu sein, wobei eine Zufuhrpumpe (22) ein wässriges Reagens, wie Harnstofflösungsfluid, unter Druck setzt und in Richtung des Injektors (16) fließen lässt, der seinerseits das Reagens in den Abgasstrom in einer Abgasleitung (18) eines Verbrennungsmotors sprüht, wobei das Verfahren (40) die Schritte aufweist:
a) Durchführen eines anfänglichen Spülzyklus (42) des Injektors (16), wenn die Zufuhrpumpe (22) gestoppt wird,
b) Durchführen eines weiteren Spülzyklus (44), wobei ein Spülzyklus (42, 44) aus einem Saugen des in dem Injektor (16) verbleibenden Reagens zurück in den Tank besteht; wobei das Verfahren (40) weiter den Schritt aufweist:
c) Überwachen der Zeit und Warten einer vorgegebenen Dauer (T1) zwischen dem anfänglichen Spülzyklus (42), Schritt a), und dem anderen Spülzyklus (44), Schritt b), wobei die vorgegebene Dauer (T1) durch Überwachen einer Injektortemperatur (C2) bestimmt wird, und Durchführen des anderen Spülzyklus (44), Schritt b), wenn die Injektortemperatur eine erste Temperaturschwelle (FT) erreicht.

2. Verfahren (40) gemäß Anspruch 1, wobei die erste Temperaturschwelle (FT) 105°C beträgt.

3. Verfahren (40) gemäß einem der vorhergehenden Ansprüche, wobei Schritt b) nur einmal durchgeführt wird.

4. Verfahren (40) gemäß einem der Ansprüche 1 bis 3, wobei Schritt b) mehrmals durchgeführt wird.

5. Verfahren (40) gemäß Anspruch 4, das weiter den Schritt aufweist:
d) Warten einer nachfolgenden vorgegebenen Dauer (T2) zwischen jeder darauffolgenden Durchführung von Schritt b).

6. Verfahren (40) gemäß Anspruch 5, wobei die nachfolgende vorgegebene Dauer (T2) zwischen 60 Sekunden und 900 Sekunden liegt und vorzugsweise weniger als 300 Sekunden beträgt.

7. Verfahren (40) gemäß einem der vorhergehenden Ansprüche, das weiter den Schritt aufweist:
e) Überwachen der Temperatur (C2) des Injektors und Durchführen des Schritts b), solange die Temperatur über einer zweiten vorgegebenen Schwelle ist.

8. Verfahren (40) gemäß Anspruch 7, wobei die zweite vorgegebene Schwelle 0°C beträgt.

9. Verfahren (40) gemäß Anspruch 7, wobei die zweite vorgegebene Schwelle -11°C beträgt.

10. Elektronische Steuereinheit (12), die konfiguriert ist zum Steuern des Betriebs eines SCR-Systems (10) gemäß einem Verfahren (40) nach einem der vorhergehenden Ansprüche.

11. Software, die die Schritte des Verfahrens (40) gemäß einem der Ansprüche 1 bis 9 ausführt, wenn auf die ESE gemäß Anspruch 11 hochgeladen.

## Revendications

1. Procédé (40) pour empêcher l'adhérence d'un injecteur pour réduction catalytique sélective (SCR) (16), l'injecteur (16) étant adapté pour être agencé dans un système SCR (10) dans lequel une pompe d'alimentation (22) met sous pression et fait s'écouler un réactif aqueux comme par exemple un fluide de solution d'urée, en direction de l'injecteur (16) qui, à son tour, pulvérise ledit réactif jusque dans le flux de gaz d'échappement dans un tuyau d'échappement (18) d'un moteur à combustion interne, le procédé (40) comprenant les étapes consistant à :
a) exécuter un cycle de purge initial (42) de l'injecteur (16) quand ladite pompe d'alimentation (22) est arrêtée.
b) exécuter un autre cycle de purge (44), un cycle de purge (42, 44) consistant à aspirer le réactif restant dans l'injecteur (16) pour le ramener vers le réservoir ;
dans lequel le procédé (40) comprend en outre l'étape consistant à :
c) surveiller le temps et attendre une durée prédéterminée (T1) entre le cycle de purge initial (42) de l'étape a) et ledit autre cycle de purge (44) de l'étape b), la durée prédéterminée (T1) étant déterminée en surveillant la température de l'injecteur (C2), et exécuter ledit autre cycle de purge (44) de l'étape b) quand ladite température de l'injecteur atteint un premier seuil de température (FT).

2. Procédé (40) selon la revendication 1, dans lequel ledit premier seuil de température (FT) est 105 °C.

3. Procédé (40) selon l'une quelconque des revendications précédentes, dans lequel l'étape b) n'est exécutée qu'une seule fois.

4. Procédé (40) selon l'une quelconque des revendications 1 à 3, dans lequel l'étape b) est exécutée plusieurs fois.

5. Procédé (40) selon la revendication 4, comprenant en outre l'étape consistant à :
d) attendre une durée prédéterminée consécutive (T2) entre chaque exécution consécutive de l'étape b).

6. Procédé (40) selon la revendication 5, dans lequel la durée prédéterminée consécutive (T2) est comprise entre 60 secondes et 900 secondes, et est de préférence inférieure à 300 secondes.

7. Procédé (40) selon l'une quelconque des revendications précédentes, comprenant en outre l'étape consistant à :
e) surveiller une température (C2) de l'injecteur et exécuter l'étape b) aussi longtemps que ladite température est au-dessus d'un deuxième seuil prédéterminé.

8. Procédé (40) selon la revendication 7, dans lequel ledit deuxième seuil prédéterminé est 0 °C.

9. Procédé (40) selon la revendication 7, dans lequel ledit deuxième seuil prédéterminé est - 11 °C.

10. Unité de commande électronique (12) configurée pour commander le fonctionnement d'un système SCR (10) selon un procédé (40) tel que défini dans l'une quelconque des revendications précédentes.

11. Logiciel exécutant les étapes du procédé (40) tel que revendiqué dans l'une quelconque des revendications 1 à 9 quand il est téléchargé sur l'unité de commande électronique de la revendication 10.
